# FASCICULE DE BREVET EUROPEEN

(11) **EP 1 908 155 B1**
(45) Date de publication et mention de la délivrance du brevet: **13.05.2009**
(21) Numéro de dépôt: 06778844.8
(22) Date de dépôt: 10.07.2006
(51) Int. Cl.: H02G 3/04

(54) **ECLISSE DE RACCORDEMENT DE TRONÇONS DE CHEMIN DE CABLES**
SPLICELEISTE ZUM VERBINDEN VON KABELEINSCHUBSEKTIONEN
SPLICE BAR FOR CONNECTING CABLE TRAY SECTIONS

(30) Priorité: 12.07.2005 FR 0507440
(43) Date de publication de la demande: 09.04.2008
(73) Titulaire: ICM Group, 21500 Montbard (FR)
(72) Inventeur: QUERTELET, Stéphane, F-60190 Remy (FR); PAREUX, Thomas, F-60280 Margny-les-Compiegne (FR)
(74) Mandataire: Hartmann, Jean-Luc
(86) Numéro de dépôt international: PCT/FR2006/001674
(87) Numéro de publication internationale: WO 2007/006961

(56) Documents cités:
- FR-A- 2 857 792
- FR-A- 2 864 361

## Description

La présente invention concerne une éclisse de raccordement pour chemin de câbles.

Le domaine de l'invention est l'éclissage de tronçons de chemin de câbles en fils. On utilise des chemins de câbles pour assurer le soutien, le logement et la protection d'éléments longilignes généralement souples tels des câbles électriques mais également des tubes, par exemple des tubes de liaison pneumatiques ou hydrauliques. Dans la suite de la présente description, dans un souci de simplification et de clarté, il sera question uniquement de câbles électriques. Toutefois l'invention s'applique à tout autre type d'éléments longilignes tels ceux évoqués précédemment ou d'autres tels des fibres optiques, etc....

Un chemin de câbles en fils généralement présente une forme allongée et une section en U. Il comporte des fils longitudinaux, appelés fils de chaîne, et des fils transversaux, appelés fils de trame. Généralement les fils de chaîne sont des fils rectilignes et les fils de trame présentent une forme en U. Tous ces fils sont soudés les uns aux autres de manière à être régulièrement espacés. On réalise de la sorte un chemin de câbles en fils, présentant une structure en treillis, qui comporte un fond destiné à servir de support aux câbles électriques (ou similaires) et des parois latérales, ou ailes, destinées à maintenir les câbles électriques sur le fond en formant une goulotte.

Un chemin de câbles comprend généralement plusieurs tronçons assemblés bout à bout ou faisant un angle entre eux ou bien encore réalisant une dérivation en T, en X, en Y ou autre. Pour raccorder plusieurs tronçons, il est connu d'utiliser des dispositifs de raccordement appelés communément éclisses.

Les éclisses les plus courantes sont des éclisses réalisant un assemblage vissé de deux tronçons de chemin de câbles. Une pièce de liaison est disposée à l'extérieur du chemin de câbles, une autre à l'intérieur et ces deux pièces de liaison maintiennent deux fils de trame d'extrémité en sandwich grâce à une vis reliant ces deux pièces.

Il existe également des éclisses dont le montage est facilité. Ce montage se fait à l'aide d'un tournevis mais uniquement pour venir rabattre une languette de maintien. Le document EP-1360749 révèle par exemple une telle éclisse. De telles éclisses sont destinées à être montées sur les ailes latérales d'un chemin de câbles en fils. Elles ne sont pas adaptées pour être utilisées au niveau du fond d'un chemin de câbles. Or on remarque que pour des chemins de câbles supportant une charge lourde, il est nécessaire de prévoir un éclissage au niveau du fond du chemin de câbles entre deux tronçons voisins. En effet, du fait de la flexion des chemins de câbles sous la charge des câbles, il est nécessaire de prévoir un maintien au niveau du fond du chemin de câbles au niveau de la liaison entre deux tronçons de chemin de câbles. Dans de tels cas, il convient d'utiliser des éclisses à montage vissé dans le fond d'un chemin de câbles.

La présente invention a alors pour but de fournir une éclisse destinée plus particulièrement à réaliser un éclissage de tronçons de chemin de câbles au niveau du fond dudit chemin de câbles, l'éclissage pouvant être effectué sans réaliser de vissage, et de préférence sans outil.

A cet effet, elle propose une éclisse de raccordement pour chemin de câbles en fils, destinée au raccordement de deux tronçons mis bout à bout de ce chemin de câbles, chaque tronçon de chemin de câbles comportant des fils de chaîne longitudinaux et des fils de trame transversaux reliant les fils de chaîne, cette éclisse comportant :
- une partie centrale allongée présentant deux zones d'appui transversales, destinées chacune à recevoir un fil de trame,
- deux pattes de contre-appui rattachées à la partie centrale d'un même côté de celle-ci et disposées de part et d'autre des zones d'appui transversales.

Une telle éclisse de raccordement est connue du document FR-A-2 864 361.

Selon l'invention, cette éclisse comporte en outre deux pattes de verrouillage rattachées à la partie centrale du côté opposé aux pattes de contre-appui et disposées de part et d'autre des zones d'appui transversales.

Une telle éclisse peut venir prendre place par exemple au niveau du fond d'un chemin de câbles et raccorder deux tronçons de ce chemin de câbles. La partie centrale chevauche les deux tronçons à raccorder et les fils de trame d'extrémité de ces deux tronçons viennent prendre place dans les zones d'appui prévues à cet effet dans la partie centrale. Après mise en place, chaque patte de contre-appui et chaque patte de verrouillage vient en appui sur un fil de chaîne. L'éclisse est maintenue sur le chemin de câbles au moyen des pattes de verrouillage.

Dans une forme de réalisation préférée, la partie centrale allongée de l'éclisse est une zone profilée présentant une section transversale en U avec un fond et deux branches latérales. Une telle forme profilée permet de donner une bonne rigidité à la partie centrale. Dans cette forme de réalisation, les zones d'appui transversales sont par exemple constituées par des encoches réalisées dans les branches latérales. Avantageusement, ces encoches seront dimensionnées de manière à pouvoir recevoir des fils de trame (d'extrémité) de divers diamètres.

Pour faciliter la mise en place manuelle de l'éclisse lors d'un raccordement de deux tronçons de chemin de câbles, au moins une patte de contre-appui est avantageusement prolongée par un rebord s'étendant perpendiculairement à l'extrémité libre de la pattede contre-appui.

Les dimensions de l'éclisse de raccordement selon l'invention sont adaptées aux dimensions du chemin de câbles auquel l'éclisse est destinée. Ainsi par exemple, la largeur de l'éclisse mesurée transversalement depuis une extrémité libre d'une patte de contre-appui jusqu'à l'extrémité libre d'une patte de verrouillage est supérieure à la distance séparant deux fils de chaîne du chemin de câbles.

Pour augmenter la rigidité de l'éclisse, notamment lors de son montage ou démontage, pour une épaisseur de tôle donnée, la partie centrale comporte avantageusement des bossages de raidissement.

Une éclisse de raccordement selon l'invention est avantageusement telle que sa partie centrale comporte des moyens de fixation, tels un trou oblong, pour recevoir un accessoire. Au niveau de l'éclisse peuvent ainsi prendre place un luminaire, une boîte de dérivation, ....

Dans une variante de réalisation préférée, chaque patte de verrouillage comporte un bossage permettant de réaliser un encliquetage sur un fil de chaîne de chemin de câbles, et l'extrémité libre de chaque patte de verrouillage est inclinée de manière à favoriser le passage du bossage sur un fil de chaîne lors de l'encliquetage. Dans cette variante préférée, la patte de verrouillage peut également être appelée patte d'encliquetage.

Une éclisse telle que décrite ci-dessus peut être par exemple réalisée par découpe et pliage d'une tôle galvanisée.

Des détails et avantages de la présente invention ressortiront mieux de la description qui suit, faite en référence aux dessins schématiques annexés sur lesquels :
La figure 1 représente une éclisse selon l'invention représentée en perspective,
Les figures 2 à 4 montrent, à échelle réduite par rapport à la figure 1, trois étapes d'un éclissage de deux tronçons de chemin de câbles à l'aide de l'éclisse de la figure 1,
La figure 5 représente en vue de dessus l'éclisse de la figure 1 montée entre deux extrémités de tronçons de chemin de câbles,
La figure 6 est une vue en coupe selon la ligne de coupe VII-VII de la figure 5, lorsque l'éclisse est dans la position représentée sur la figure 2, et
La figure 7 correspond à la vue de la figure 6, l'éclisse étant montée comme représenté sur les figures 4 et 5.

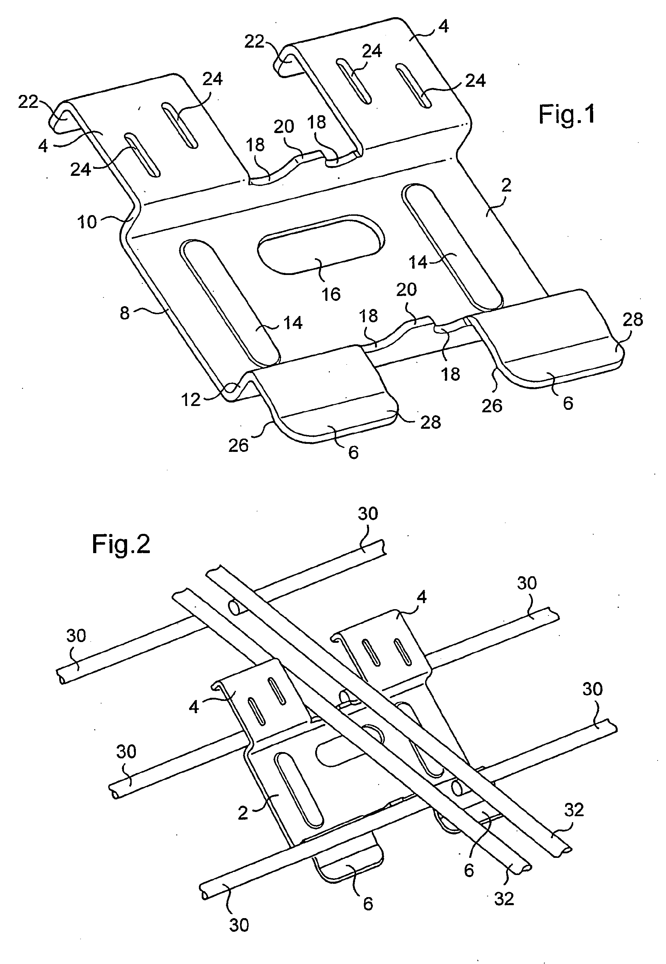

Les dessins représentent une forme de réalisation préférée d'une éclisse de raccordement selon l'invention. La figure 1 est une vue en perspective d'une telle éclisse isolée (les autres figures montrent la même éclisse positionnée par rapport à des tronçons de chemin de câbles).

Comme on peut le constater sur la figure 1, l'éclisse représentée est par exemple réalisée à partir d'une tôle (par exemple en acier galvanisé) découpée et pliée. Cette éclisse comporte une partie centrale 2 présentant une forme profilée de section transversale en U, à partir de laquelle s'étendent d'un côté deux pattes de contre-appui 4 et d'un autre côté deux pattes de verrouillage appelées par la suite pattes d'encliquetage 6.

Comme indiqué précédemment, la partie centrale 2 est une partie profilée de section transversale en U. Elle comporte ainsi un fond 8, une première branche latérale 10 et une seconde branche latérale 12.

Le fond 8 présente ici une forme rectangulaire. Cette forme semble être ici la plus adaptée mais d'autres formes, avec de préférence deux bords opposés parallèles, peuvent également être envisagées, dans une éclisse selon l'invention. La partie centrale 2 n'est pas forcément profilée et le fond 8 peut présenter une forme quelconque. Par rapport à la partie centrale 2 profilée, dans la forme de réalisation représentée, les grands côtés du fond 8 s'étendent longitudinalement et correspondent chacun à une branche latérale.

Le fond 8 comporte deux raidisseurs 14 et un trou oblong 16. Les raidisseurs 14 sont des bossages réalisés dans le fond 8 et s'étendant transversalement. La présence de ces raidisseurs permet de réaliser l'éclisse considérée dans une tôle d'épaisseur moindre par rapport à une éclisse ne comportant pas de tels raidisseurs tout en conservant la même rigidité. Le trou oblong 16 quant à lui s'étend longitudinalement et peut être utilisé pour recevoir un accessoire tel par exemple un luminaire ou un boîtier de dérivation.

La première branche latérale 10 s'étend perpendiculairement au fond 8 sur toute la longueur de celui-ci. A chacune de ses extrémités, la première branche latérale porte une patte de contre-appui 4. Au centre, la première branche latérale 10 présente, du côté opposé au fond 8, deux encoches 18 séparées par une languette d'espacement 20. Comme expliqué plus loin, ces encoches 18 sont destinées à servir de zone d'appui et de logement pour des fils de trame d'extrémité de deux tronçons de chemin de câbles. Leur forme et leur taille sont adaptées à la section circulaire et au(x) diamètre(s) des fils de trame à recevoir.

Chaque patte de contre-appui 4 s'étend à partir du bord de la première branche latérale 10 vers l'extérieur de la partie centrale 2 et sensiblement parallèlement au fond 8. L'extrémité libre de chaque patte de contre-appui 4, opposée à la première branche latérale 10, est recourbée vers le bas, c'est-à-dire du côté du fond 8, formant ainsi un rebord appelé par la suite poussoir 22. On remarque sur chaque patte de contre-appui 4 la présence de deux fentes 24 s'étendant ici transversalement par rapport au profilé formant la partie centrale 2. Ces fentes 24 sont chacune destinée à recevoir l'extrémité d'un tournevis. Elles ne sont utilisées a priori que dans le cas d'un montage difficile de l'éclisse sur des tronçons de chemin de câbles.

La seconde branche latérale 12 est semblable à la première branche latérale 10. Elle présente elle aussi deux encoches 18 séparées par une languette d'espacement 20. Les encoches 18 des première et seconde branches latérales 10 et 12 sont alignées transversalement par rapport à la partie centrale 2 profilée.

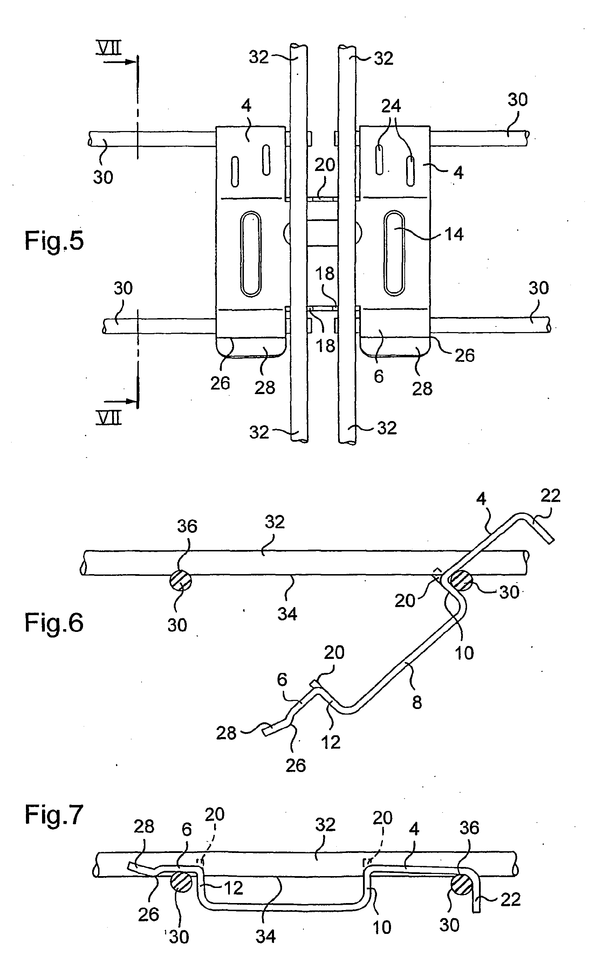

La seconde branche latérale 12 porte à ses deux extrémités, de chaque côté des encoches 18, les pattes d'encliquetage 6. Chacune de ces pattes d'encliquetage 6 s'étend globalement parallèlement au fond 8 vers l'extérieur de la partie centrale 2 profilée. Les figures 6 et 7 permettent de voir la forme des pattes d'encliquetage 6. On remarque sur ces figures que, en partant de la seconde branche latérale 12, chaque patte d'encliquetage 6 s'étend tout d'abord vers l'extérieur de la partie centrale 2 profilée dans un plan sensiblement parallèle au fond 8, puis forme un bossage 26 vers le bas, c'est-à-dire vers le fond 8, avant de se terminer par une extrémité inclinée 28 vers le haut.

Les figures 2 à 4 illustrent le montage de l'éclisse de la figure 1 pour réaliser le raccordement de deux tronçons de chemin de câbles. Il s'agit ici d'un chemin de câbles en fils. De tels chemins de câbles sont connus de l'homme du métier. Ils sont réalisés à partir de fils de chaîne 30 et de fils de trame 32. Les fils de chaîne 30 sont des fils longitudinaux tandis que les fils de trame 32 présentent une forme en U et s'étendent transversalement par rapport aux fils de chaîne 30. Ainsi, un chemin de câbles en fils présente de manière classique un fond et des ailes latérales. Sur les dessins annexés, seul le fond du chemin de câbles est partiellement représenté. En effet, l'éclisse de la figure 1 présente la particularité d'être particulièrement adaptée pour raccorder des tronçons de chemin de câbles en se fixant au fond de ceux-ci.

De façon classique, deux tronçons de chemin de câbles à raccorder sont rapprochés l'un de l'autre. De tels tronçons présentent à leur extrémité chacun un fil de trame 32 d'extrémité.

La figure 2 illustre le premier positionnement de l'éclisse par rapport aux tronçons de chemin de câbles alignés l'un par rapport à l'autre. Les pattes de contre-appui 4 de l'éclisse sont disposées de part et d'autre des fils de trame 32 d'extrémité. La partie centrale 2 de l'éclisse se trouve sous le chemin de câbles et les pattes de contre-appui 4 se trouvent à l'intérieur de celui-ci. Le plan du fond 8 de la partie centrale 2 de l'éclisse est par exemple incliné d'environ 45° par rapport au fond du chemin de câbles. Les fils de trame 32 d'extrémité se trouvent au niveau des encoches 18 de la première branche latérale 10.

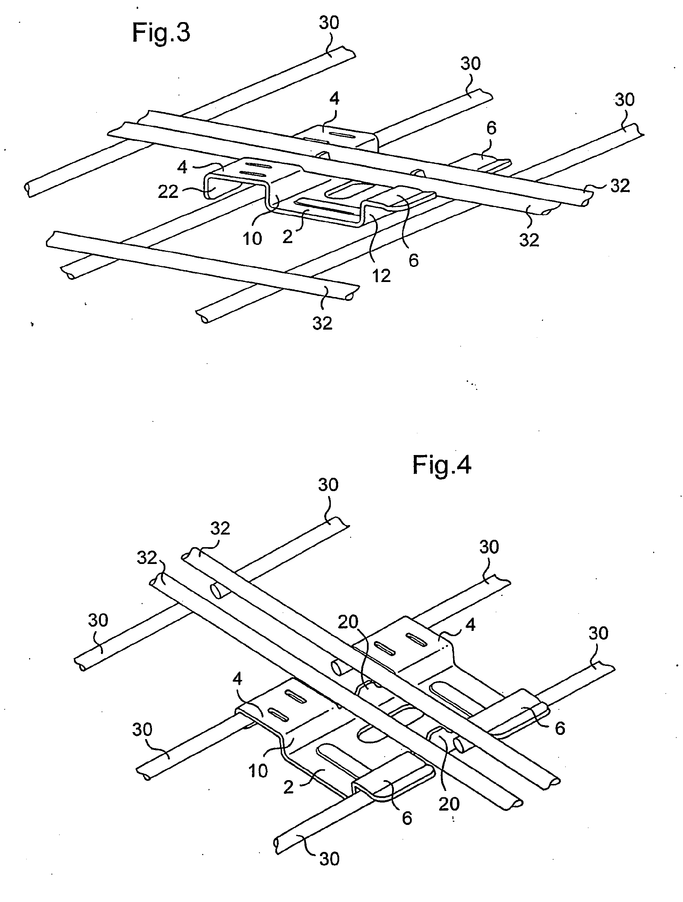

Dans cette position représentée sur la figure 2, la face extérieure de la première branche latérale 10 est en appui contre un fil de chaîne 30 de chaque tronçon de chemin de câbles. L'éclisse est alors pivotée autour des deux fils de chaîne 30 contre lesquels la face extérieure de la première branche latérale 10 est en appui de manière à devenir sensiblement parallèle au fond du chemin de câbles. Il convient ici de prévoir que la distance séparant la première branche latérale 10 de l'extrémité libre des pattes d'encliquetage 6 soit inférieure à la distance séparant deux fils de chaîne 30 dans le fond du chemin de câbles. La position pivotée est représentée sur la figure 3. On remarque dans cette position que les fils de trame 32 d'extrémité reposent dans les encoches 18 de la première branche latérale 10 et de la seconde branche latérale 12 et viennent en appui au fond de ces encoches 18.

Pour finir le raccordement, l'éclisse de fond est coulissée le long des fils de trame 32 d'extrémité de manière à faire passer les bossages 26 par-dessus les fils de chaîne 30 voisins des fils de chaîne 30 contre lesquels reposait la face extérieure de la première branche latérale 10. Les pattes de contre-appui 4 reposent sur les fils de chaîne 30 en s'appuyant sur ceux-ci et en permettant ainsi aux fils de trame 32 de rester en appui au fond des encoches 18. Ce déplacement en translation peut se faire manuellement facilement à l'aide des poussoirs 22. En cas de difficultés de montage, un tournevis peut être utilisé en introduisant son extrémité dans l'une des fentes 24 et en prenant appui sur un fil de chaîne.

Les figures 4 et 5 illustrent l'éclisse de la figure 1 dans sa position montée réalisant le raccordement de deux tronçons de chemin de câbles. Dans cette position, deux fils de chaîne 30 viennent en butée contre les poussoirs 22 tandis que deux autres fils de chaîne 30 voisins se trouvent entre la seconde branche latérale 12 de la partie centrale 2 et les bossages 26 des pattes d'encliquetage 6 correspondantes.

On remarque par exemple sur les figures 4 et 5 que la largeur de l'éclisse de la figure 1, c'est-à-dire la dimension de cette éclisse mesurée transversalement par rapport à la partie centrale 2 profilée, est légèrement supérieure à la distance séparant deux fils de chaîne voisins au fond du chemin de câbles. La distance séparant la face intérieure des poussoirs 22 orientée vers la partie centrale 2 de l'éclisse de la face extérieure de la seconde branche latérale 12 est inférieure de quelques millimètres à la distance séparant deux fils de chaîne 30 voisins du fond du chemin de câbles.

La figure 7 montre les appuis de l'éclisse de la figure 1 dans sa position montée sur les fils de chaîne 30, ces appuis permettant de bien maintenir en appui les fils de trame 32 au fond des encoches 18 servant de zones d'appui et de logements pour ces fils de trame 32. Bien entendu, les cotes de l'éclisse de la figure 1 sont adaptées aux différents chemins de câbles sur lesquels cette éclisse doit être montée. Ainsi, pour réaliser les appuis de l'éclisse sur le chemin de câbles et assurer ainsi un parfait raccordement de deux tronçons de chemin de câbles, on prévoit que la cote entre le fond des encoches 18 et les faces inférieures (c'est-à-dire orientées vers le fond 8 de la partie centrale 2) des pattes de contre-appui 4 et d'encliquetage 6 destinées à venir au contact de fils de chaîne 30 est légèrement inférieure en position de repos (figures 1 à 3 et 6) à la différence de hauteur entre la génératrice inférieure 34 d'un fil de trame 32 d'extrémité et la génératrice supérieure 36 d'un fil de chaîne 30. Cette différence de hauteur est sensiblement constante d'un chemin de câbles à l'autre, même lorsque les fils sont de diamètres différents, si bien que l'éclisse peut s'adapter à tous les chemins de câbles (sous réserve du bon espacement entre les fils de chaîne).

Le montage de l'éclisse a été décrit ci-dessus en référence à un fond de chemin de câbles. Il est clair cependant qu'une telle éclisse peut également être utilisée au niveau d'une aile latérale d'un chemin de câbles. Bien entendu, il convient que le chemin de câbles soit alors tel qu'au moins deux fils de chaîne soient présents sur une hauteur d'aile latérale de ce chemin de câbles.

Une éclisse telle que décrite ci-dessus permet de raccorder et d'aligner de façon rigide, très rapidement et sans outil, deux tronçons de chemin de câbles en fils contigus. Cette éclisse présente également l'avantage de pouvoir s'adapter à des chemins de câbles utilisant des fils de différents diamètres. Il suffit à cet effet de prévoir des encoches assez larges pour loger tous les types de fils habituellement utilisés pour réaliser des fils de trame dans un chemin de câbles.

Une éclisse selon l'invention est adaptée à réaliser l'éclissage de tronçons de chemin de câbles recevant des charges lourdes.

Les formes de réalisation décrites présentent l'avantage de pouvoir être montées facilement mais elles permettent également un démontage facile car le montage est réalisé sans déformer plastiquement l'éclisse.

La présente invention n'est pas limitée à la forme de réalisation préférée décrite ci-dessus à titre d'exemple non limitatif. Elle concerne également toutes les variantes de réalisation à la portée de l'homme du métier.

Ainsi, la forme de la partie centrale de l'éclisse pourrait être différente de la forme décrite. Selon une variante de réalisation, cette partie centrale pourrait être une tôle sensiblement plane dans laquelle deux goulottes seraient réalisées pour recevoir les fils de trame d'extrémités des tronçons de chemin de câbles à raccorder. On peut alors imaginer que des pattes d'appui et de verrouillage (ou d'encliquetage) soient sensiblement dans le plan de la partie centrale ou soient légèrement décalées par rapport à cette partie centrale.

La forme des divers éléments, telles les pattes d'appui et les pattes de verrouillage (ou d'encliquetage), sont données dans la description ci-dessus uniquement à titre illustratif et ne sont pas limitatives. Ainsi par exemple la présence d'un poussoir sur la patte d'appui est facultative. De même les fentes, comme il ressort de la description qui précède, sont facultatives sur ces pattes d'appui.

Dans le cas où le verrouillage est réalisé par encliquetage, la forme des bossages des pattes d'encliquetage pourrait être différente de celle décrite. Au lieu d'avoir un bossage s'étendant sur toute une ligne, on pourrait avoir un ou plusieurs bossages ponctuels.

Le verrouillage des éclisses décrites est réalisé par un encliquetage. Il est toutefois envisageable, sans sortir du cadre de l'invention, de venir verrouiller une éclisse selon l'invention sur un chemin de câbles à l'aide d'une languette de verrouillage déformable.

## Revendications

1. Éclisse de raccordement pour chemin de câbles en fils, destinée au raccordement de deux tronçons mis bout à bout de ce chemin de câbles, chaque tronçon de chemin de câbles comportant des fils de chaîne (30) longitudinaux et des fils de trame (32) transversaux reliant les fils de chaîne (30), éclisse comportant :
- une partie centrale (2) allongée présentant deux zones d'appui(18) transversales, destinées chacun à recevoir un fil de trame (32),
- deux pattes de contre-appui (4) rattachées à la partie centrale (2) d'un même côté de celle-ci et disposées de part et d'autre des zones d'appui(18) transversales,
**caractérisée en ce qu'**elle comporte en outre :
- deux pattes de verrouillage (6) rattachées à la partie centrale (2) du côté opposé aux pattes de contre-appui (4) et disposées de part et d'autre des zones d'appui (18) transversales.

2. Éclisse de raccordement selon la revendication 1, **caractérisée en ce que** la partie centrale (2) allongée est une zone profilée présentant une section transversale en U avec un fond (8) et deux branches latérales (10, 12).

3. Éclisse de raccordement selon la revendication 2, **caractérisée en ce que** les zones d'appui transversales sont constitués par des encoches (18) réalisées dans les branches latérales (10, 12).

4. Éclisse de raccordement selon l'une des revendications 1 à 3, **caractérisée en ce qu'**au moins une patte de contre-appui (4) est prolongée par un rebord (22) s'étendant perpendiculairement à l'extrémité libre de la patte de contre-appui.

5. Éclisse de raccordement selon l'une des revendications 1 à 4, **caractérisée en ce que** la largeur de l'éclisse mesurée transversalement depuis une extrémité libre d'une patte de contre-appui (4) à l'extrémité libre d'une patte de verrouillage (6) est supérieure à la distance séparant deux fils de chaîne (30) du chemin de câbles.

6. Éclisse de raccordement selon l'une des revendications 1 à 5, **caractérisée en ce que** la partie centrale (2) comporte des bossages (14) de raidissement.

7. Éclisse de raccordement selon l'une des revendications 1 à 6, **caractérisée en ce que** chaque patte de verrouillage (6) comporte un bossage (26) permettant de réaliser un encliquetage sur un fil de chaîne (30) de chemin de câbles, et **en ce que** l'extrémité libre (28) de chaque patte de verrouillage (6) est inclinée de manière à favoriser le passage du bossage (26) sur un fil de chaîne (30) lors de l'encliquetage.

8. Éclisse de raccordement selon l'une des revendications 1 à 7, **caractérisée en ce que** la partie centrale (2) comporte des moyens de fixation (16), tels un trou oblong, pour recevoir un accessoire.

9. Éclisse de raccordement selon l'une des revendications 1 à 8, **caractérisée en ce que en ce qu'**elle est réalisée par découpe et pliage d'une tôle en acier galvanisé.

## Claims

1. A splice bar for wire cable trays, for connecting two wire cable tray sections placed end-to-end, each cable tray section comprising longitudinal warp wires (30) and transverse weft wires (32) linking the warp wires (30), the splice bar comprising:
- an elongate central part (2) having two transverse bearing areas (18) each adapted to receive a weft wire (32),
- two counter-bearing feet (4) attached to the central part (2) on the same side thereof and disposed on respective opposite sides of the transverse bearing areas (18),
**characterized in that** it further comprises:
- two locking feet (6) attached to the central part (2) on the opposite side to the counter-bearing feet (4) and disposed on respective opposite sides of the transverse bearing areas (18).

2. A splice bar according to claim 1, **characterized in that** the elongate central part (2) is a profiled area having a U-shaped cross section with a bottom (8) and two lateral branches (10, 12).

3. A splice bar according to claim 2, **characterized in that** the transverse bearing areas are constituted by notches (18) in the lateral branches (10, 12).

4. A splice bar according to one of claims 1 to 3, **characterized in that** at least one counter-bearing foot (4) is extended by a rim (22) extending perpendicularly to the free end of the counter-bearing foot.

5. A splice bar according to one of claims 1 to 4, **characterized in that** the width of the splice bar measured transversely from a free end of a bearing foot (4) to the free end of a locking foot (6) is greater than the distance between two warp wires (30) of the cable tray.

6. A splice bar according to one of claims 1 to 5, **characterized in that** the central part (2) comprises stiffener bosses (14).

7. A splice bar according to one of claims 1 to 6, **characterized in that** each locking foot (6) comprises a boss (26) enabling clipping onto a warp wire (30) of the cable tray, and **in that** the free end (28) of each locking foot (6) is inclined so as to promote the passage of the boss (26) over a warp wire (30) on clipping.

8. A splice bar according to one of claims 1 to 7, **characterized in that** the central part (2) comprises fixing means (16), such as an oblong hole, to receive an accessory.

9. A splice bar according to one of claims 1 to 8, **characterized in that in that** it is made by cutting and bending a galvanized steel plate.

## Patentansprüche

1. Verbindungsplatte für eine Kabelrinne aus Drähten, die zur Verbindung von zwei End-zu-End angeordneten Abschnitten dieser Kabelrinne bestimmt ist, wobei jeder Kabelrinnenabschnitt längs verlaufende Kettdrähte (30) und quer verlaufende Schussdrähte (32) aufweist, die die Kettdrähte (30) verbinden, wobei die Platte aufweist:
- einen länglichen zentralen Bereich (2), der zwei quer verlaufende Auflagezonen (18) hat, die je dazu bestimmt sind, einen Schussdraht (32) aufzunehmen,
- zwei Gegenauflage-Laschen (4), die auf der gleichen Seite an den zentralen Bereich (2) anschließen und zu beiden Seiten der quer verlaufenden Auflagezonen (18) angeordnet sind,
**dadurch gekennzeichnet, dass** sie außerdem aufweist:
- zwei Verriegelungslaschen (6), die auf der den Gegenauflage-Laschen (4) entgegengesetzten Seite an den zentralen Bereich (2) anschließen und zu beiden Seiten der quer verlaufenden Auflagezonen (18) angeordnet sind.

2. Verbindungsplatte nach Anspruch 1, **dadurch gekennzeichnet, dass** der längliche zentrale Bereich (2) eine Profilzone ist, die einen U-förmigen Querschnitt mit einem Boden (8) und zwei Seitenschenkeln (10, 12) hat.

3. Verbindungsplatte nach Anspruch 2, **dadurch gekennzeichnet, dass** die quer verlaufenden Auflagezonen von Kerben (18) gebildet werden, die in den Seitenschenkeln (10, 12) ausgebildet sind.

4. Verbindungsplatte nach einem der Ansprüche 1 bis 3, **dadurch gekennzeichnet, dass** mindestens eine Gegenauflage-Lasche (4) von einer Randleiste (22) verlängert wird, die sich lotrecht zum freien Ende der Gegenauflage-Lasche erstreckt.

5. Verbindungsplatte nach einem der Ansprüche 1 bis 4, **dadurch gekennzeichnet, dass** die quer von einem freien Ende einer Gegenauflage-Lasche (4) zum freien Ende einer Verriegelungslasche (6) gemessene Breite der Platte größer als der zwei Kettdrähte (30) der Kabelrinne trennende Abstand ist.

6. Verbindungsplatte nach einem der Ansprüche 1 bis 5, **dadurch gekennzeichnet, dass** der zentrale Bereich (2) Versteifungsbuckel (14) aufweist.

7. Verbindungsplatte nach einem der Ansprüche 1 bis 6, **dadurch gekennzeichnet, dass** jede Verriegelungslasche (6) einen Buckel (26) aufweist, der ein Einrasten auf einem Kabelrinnen-Kettdraht (30) erlaubt, und dass das freie Ende (28) jeder Verriegelungslasche (6) so geneigt ist, dass der Durchgang des Buckels (26) über einen Kettdraht (30) beim Einrasten begünstigt wird.

8. Verbindungsplatte nach einem der Ansprüche 1 bis 7, **dadurch gekennzeichnet, dass** der zentrale Bereich (2) Befestigungseinrichtungen (16) wie ein Langloch aufweist, um ein Zubehörteil aufzunehmen.

9. Verbindungsplatte nach einem der Ansprüche 1 bis 8, **dadurch gekennzeichnet, dass** sie durch Ausschneiden und Umbiegen eines galvanisierten Stahlblechs hergestellt wird.
